# EUROPEAN PATENT APPLICATION

(11) **EP 2 088 492 A2**
(43) Date of publication of application: **12.08.2009**
(21) Application number: 09000531.5
(22) Date of filing: 15.01.2009
(51) Int. Cl.: G05G 1/10, G05G 1/01

(54) **Manual input apparatus**

(30) Priority: 08.02.2008 JP 2008028928
(71) Applicant: Alps Electric Co., Ltd., Tokyo 145-8501 (JP)
(72) Inventor: Onodera, Mikio, Tokyo 145-8501 (JP)
(74) Representative: Wohlfrom, Karl-Heinz

(57) **Abstract**

Manual input apparatus having a first rotation manipulation member (3) which rotates at the time of inputting, a second rotation manipulation member (5) provided with a guide groove (5a) is concentrically aligned with the first rotation manipulation member (3), and a drive pin (12) fixed to a liftable member (6) is slidably inserted into the guide groove (5a) so as to translate a rotating movement of the second rotation manipulation member (5) to a lifting or lowering movement of the liftable member (6).

## Description

### Cross Reference to Related Applications

The present invention contains subject matter related to Japanese Patent Application No. 2008-28928 filed in the Japanese Patent Office on February 8, 2008, the entire contents of which being incorporated herein by reference.

### BACKGROUND

### 1. Technical Field

The present invention relates to a manual input apparatus which includes a rotation manipulation member that is manipulated to rotate by a manipulator and is allowed to control various electronic devices by manipulating the rotation manipulation member, and more particularly, to a manual input apparatus which has a function of switching a manipulation touch to selectively apply a plurality of manipulation feels to a rotation manipulation member.

### 2. Related Art

As an in-car controller for controlling a plurality of types of electronic devices such as an air conditioner, an audio, and a car navigation, a manual input apparatus which allocate functions of selecting or controlling the electronic devices to a single rotation manipulation member that is manipulated to rotate by a manipulator such that the functions of selecting and controlling the devices are performed by manipulating the rotation manipulation member, has been known. Here, in order to accurately perform the manipulation with a distinguishable manipulation feel of the rotation manipulation member, the manual input apparatus is provided with a unit for switching a manipulation touch to selectively apply a manipulation force needed for the rotation manipulation member or click feels.

As an example of the unit for switching a manipulation touch, there is a unit in which a plurality of cam members are stacked and fixed with respect to a rotation shaft of the rotation manipulation member, an elastic contact member which is movable in an axial direction of the rotation manipulation member is provided on side portions of the cam members, and the elastic contact member is lifted or lowered by an electric actuator as a drive source to switch an engagement relationship between each cam member and the elastic contact member, thereby generating a plurality types of click feels (for example, see JP-A-2002-189559).

As another example of the unit for switching a manipulation touch, there is a unit in which a plurality of cam members are stacked and fixed with respect to a rotation shaft of the rotation manipulation member, a plurality of pairs of an electric contact member and a momentary switch corresponding to each cam member are provided, and one of the elastic contact members is engaged with the corresponding cam member by pressing the corresponding momentary switch to switch an engagement relationship between the corresponding cam member and the elastic contact member, thereby generating a plurality of types of click feels (see JP-A-2006-222003).

### SUMMARY

However, in the former example disclosed in JP-A-2002-189559, the single elastic contact member is selectively engaged with the cam members by using the electric actuator. Therefore, although the function of switching a manipulation feel is added, the entire size of the apparatus is not significantly increased. However, as the drive source of the elastic contact member, the electric actuator is needed, and this causes an increase in cost. In the latter example disclosed in JP-A-2006-222003, the engagement relationship between the elastic contact member and the cam member is mechanically switched by the pressing manipulation force of the momentary switch. Therefore, the electric actuator that is a factor of the increase in cost can be omitted. However, the plurality of momentary switches corresponding to each cam member need to be disposed at a panel and the like, and this is a large factor of the increase in size of the entire apparatus.

It is desirable to provide a manual input apparatus having a function of switching a manipulation touch with a small size at lower costs.

According to an aspect of the invention, the manual input apparatus having a first rotation manipulation member which rotates at the time of inputting, is characterized by including: a liftable member liftably supported in an axial direction of the first rotation manipulation member; a plurality of cam members which have different shapes from each other and provided to one of the first rotation manipulation member and the liftable member; an elastic contact member which is provided to the other of the first rotation manipulation member and the liftable member and selectively engaged with the cam members; a second rotation manipulation member concentrically aligned with the first rotation manipulation member to be rotatably supported; and a movement translating unit which translates a rotating movement of the second rotation manipulation member to a lifting or lowering movement of the liftable member, wherein the second rotation manipulation member is manipulated to rotate to allow a lifting or lowering position of the liftable member to be shifted, thereby enabling the elastic contact member to be engaged with another of the cam members, and wherein a manipulation touch applied to the first rotation manipulation member during the rotation manipulation is different depending on which one of the cam members is engaged with the elastic contact member.

In the manual input apparatus having the aforementioned configuration, when manipulator rotates the second rotation manipulation member, a lift or lower position of the liftable member is shifted, and the elastic contact member is disengaged from the cam member that is previously engaged and then engaged with the different cam member. Accordingly, due to the drive units that mechanically operate, the manipulation touch applied to the first rotation manipulation member during the rotation manipulation can be set to be different from the previous manipulation touch. In addition, the second rotation manipulation member is concentrically aligned with the first rotation manipulation member, the entire apparatus can be downsized, and it is easy to continuously manipulate the first and second rotation manipulation members.

With such a configuration, the movement translating unit may be constituted by a guide groove provided to one of the second rotation manipulation member and the liftable member, and a drive pin which is provided to the other thereof to be slidably inserted into the guide groove, and the guide groove may extend in an oblique direction with respect to the axial direction of the first rotation manipulation member, thereby smoothly translating the rotating movement of the second rotation manipulation member to the lifting or lowering movement of the liftable member.

In the manual input apparatus according to the aspect of the invention, when the second rotation manipulation member concentrically aligned with the first rotation manipulation member is manipulated to rotate, the lift or lower position of the liftable member is shifted, and the elastic contact member is disengaged from the cam member that is previously engaged and then engaged with the different cam member. Therefore, the manipulation touch applied to the first rotation manipulation member during the rotation manipulation can be mechanically switched. Therefore, the entire apparatus can further be downsized while suppressing an increase in cost of the unit for switching a manipulation touch. In addition, the manipulator can continuously manipulate the first and second rotation manipulation members that are concentrically aligned with each other with a short movement of the finger. Therefore, good manipulability can be achieved.

### BRIEF DESCRIPTION OF THE DRAWINGS

Fig. 1 is a top view illustrating a manual input apparatus according to an embodiment of the invention.
Fig. 2 is a side view illustrating the manual input apparatus of Fig. 1.
Fig. 3 is a sectional view taken along line 3-3 of Fig. 1.
Fig. 4 is a sectional view taken along line 4-4 of Fig. 1.
Fig. 5 is a sectional view taken along line 5-5 of Fig. 3.
Fig. 6 is a sectional view taken along line 6-6 of Fig. 3.
Fig. 7 is a side view illustrating a second rotation manipulation member of Fig. 2 which is turned in one direction.
Fig. 8 is a sectional view illustrating the second rotation manipulation member of Fig. 3 which is turned in one direction.
Fig. 9 is a sectional view illustrating the second rotation manipulation member of Fig. 4 which is turned in one direction.
Fig. 10 is a sectional view illustrating the second rotation manipulation member of Fig. 5 which is turned in one direction.
Fig. 11 is a side view illustrating the second rotation manipulation member of Fig. 2 which is turned in the other direction.
Fig. 12 is a sectional view illustrating the second rotation manipulation member of Fig. 3 which is turned in the other direction.
Fig. 13 is a sectional view illustrating the second rotation manipulation member of Fig. 4 which is turned in the other direction.
Fig. 14 is a sectional view illustrating the second rotation manipulation member of Fig. 5 which is turned in the other direction.

### DESCRIPTION OF EXEMPLARY EMBODIMENTS

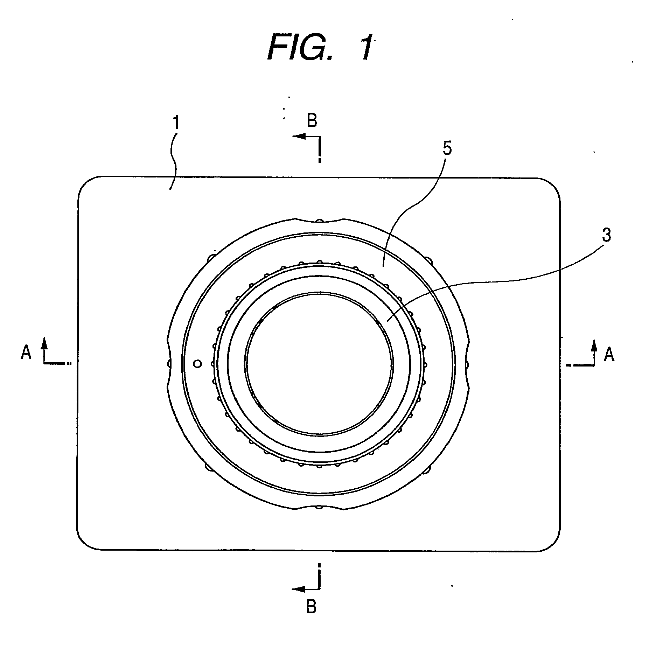

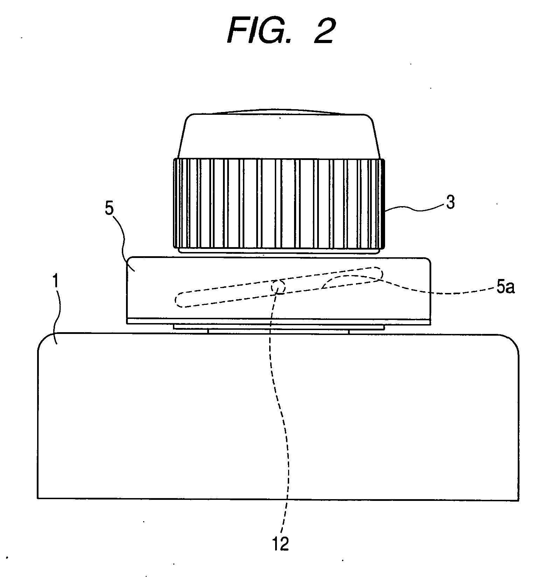

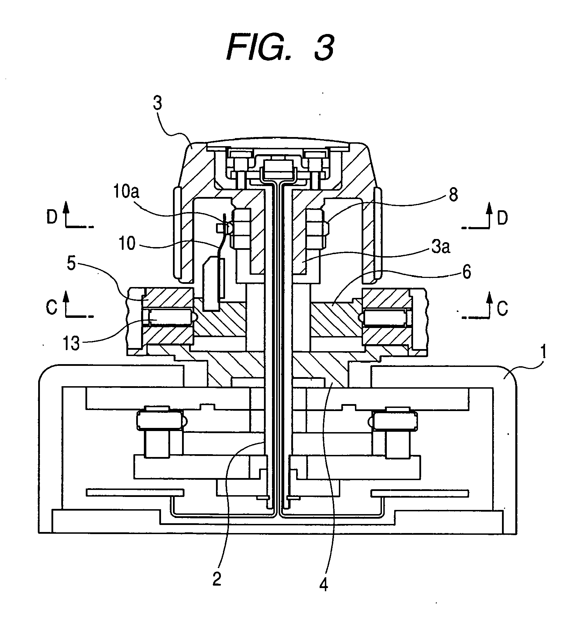

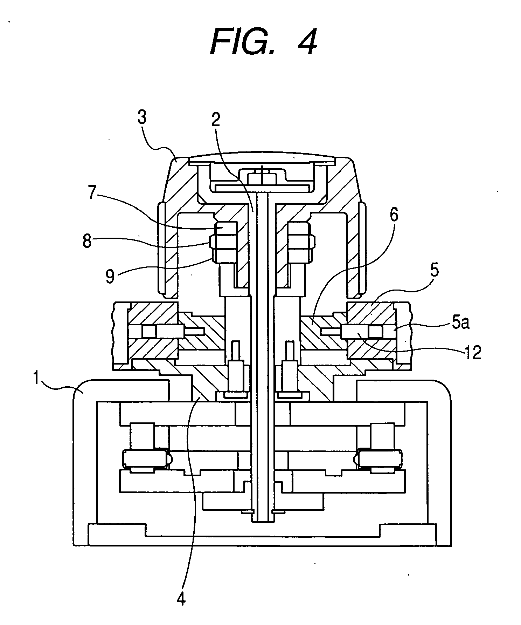

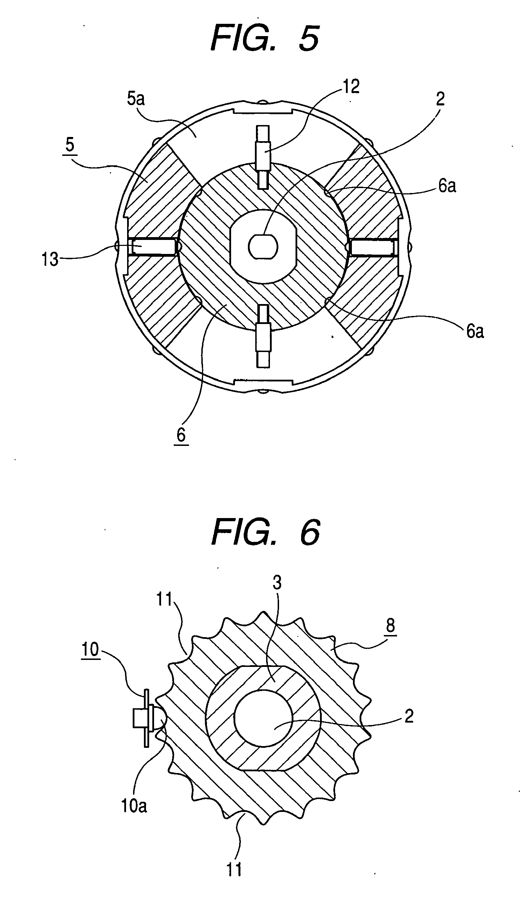

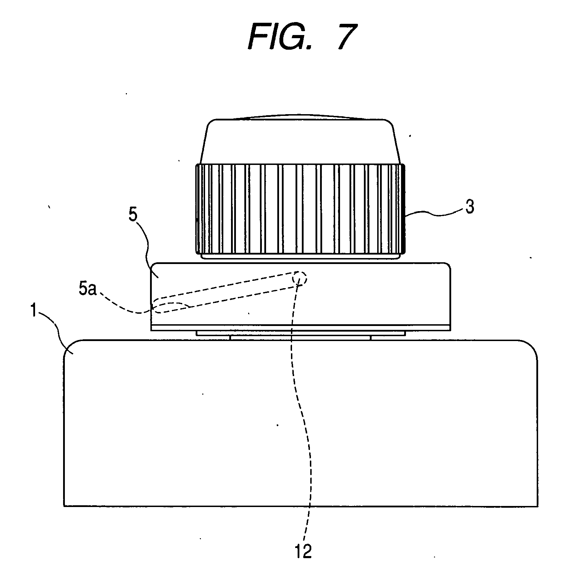

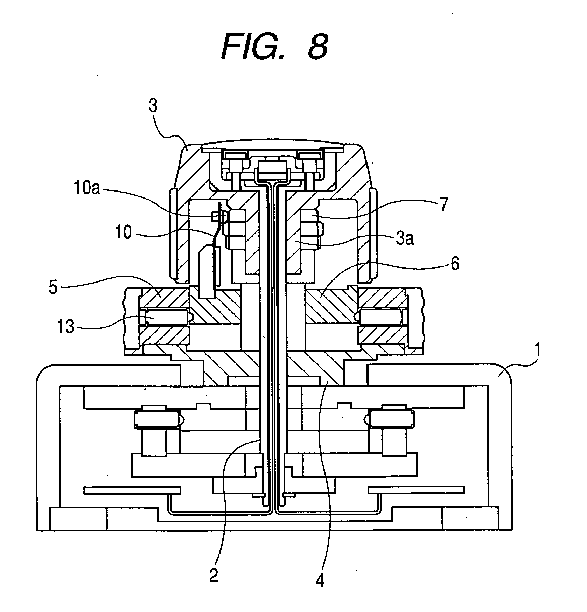

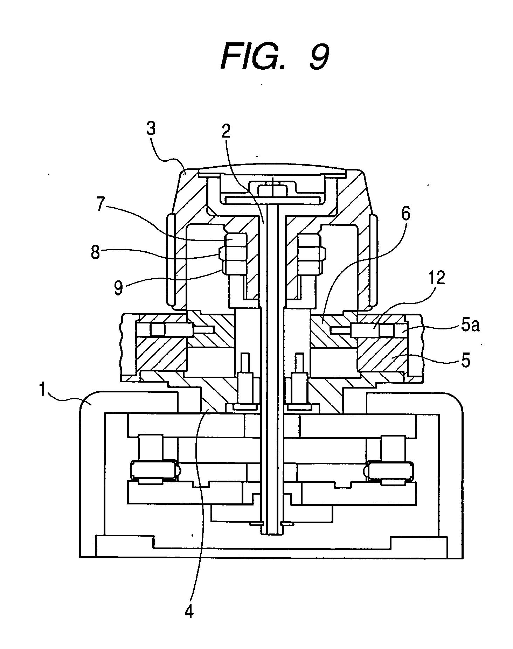

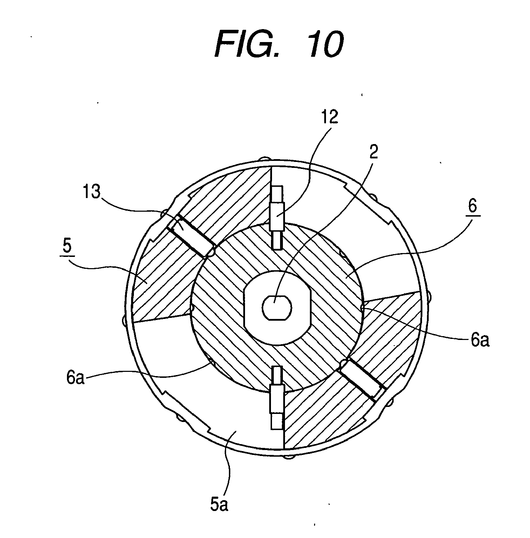

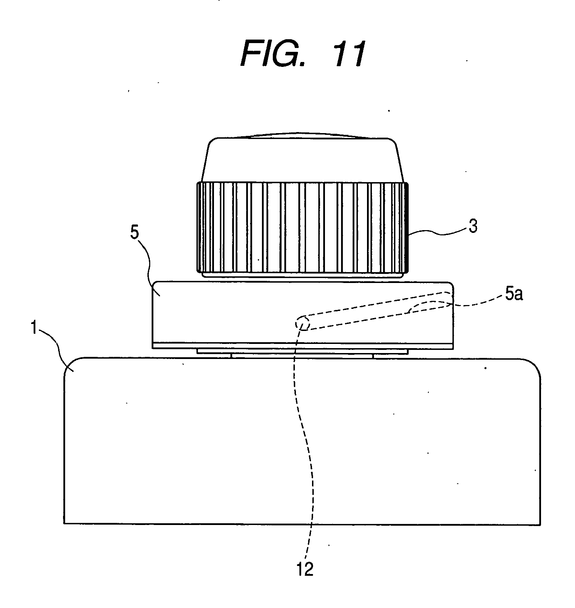

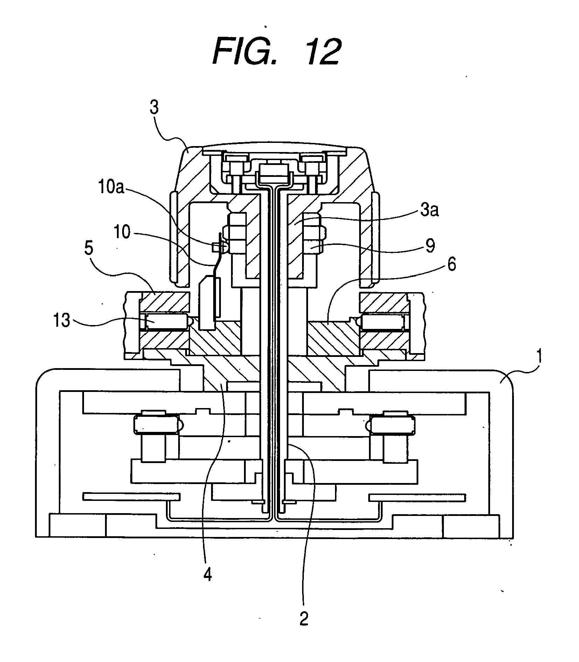

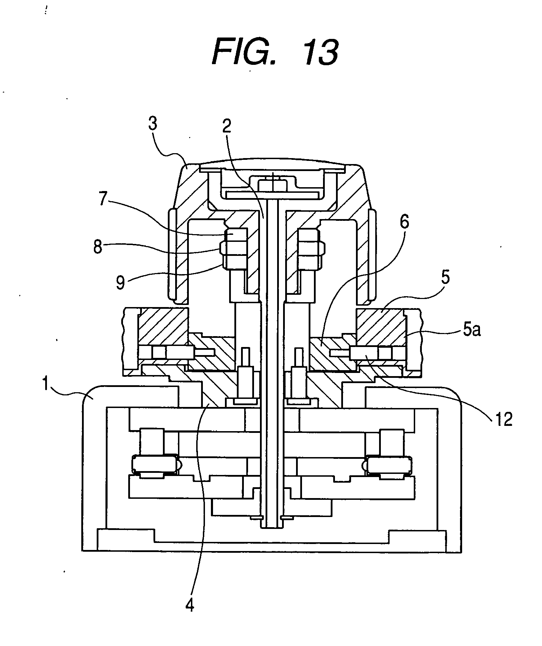

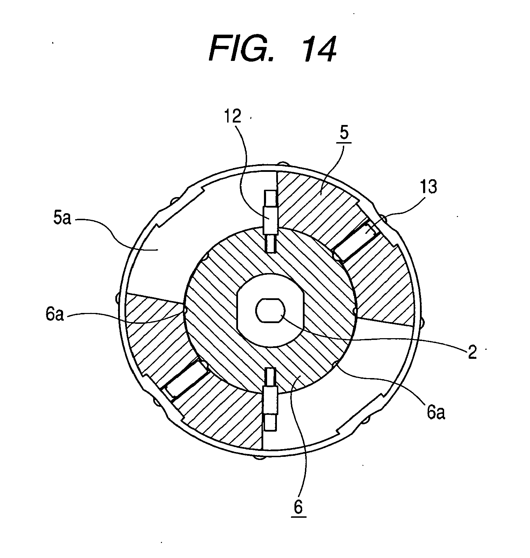

Exemplary embodiment of the invention will be described with reference to the accompanying drawings. Fig. 1 is a top view illustrating a manual input apparatus according to an embodiment of the invention. Fig. 2 is a side view illustrating the manual input apparatus of Fig. 1. Fig. 3 is a sectional view taken along line 3-3 of Fig. 1. Fig. 4 is a sectional view taken along line 4-4 of Fig. 1. Fig. 5 is a sectional view taken along line 5-5 of Fig. 3. Fig. 6 is a sectional view taken along line 6-6 of Fig. 3. Fig. 7 is a side view illustrating a second rotation manipulation member of Fig. 2 which is turned in one direction. Fig. 8 is a sectional view illustrating the second rotation manipulation member of Fig. 3 which is turned in one direction. Fig. 9 is a sectional view illustrating the second rotation manipulation member of Fig. 4 which is turned in one direction. Fig. 10 is a sectional view illustrating the second rotation manipulation member of Fig. 5 which is turned in one direction. Fig. 11 is a side view illustrating the second rotation manipulation member of Fig. 2 which is turned in the other direction. Fig. 12 is a sectional view illustrating the second rotation manipulation member of Fig. 3 which is turned in the other direction. Fig. 13 is a sectional view illustrating the second rotation manipulation member of Fig. 4 which is turned in the other direction. Fig. 14 is a sectional view illustrating the second rotation manipulation member of Fig. 5 which is turned in the other direction.

The manual input apparatus according to an embodiment of the invention includes a base 1 fixed on a parent material inside a car such as a center console, a first rotation manipulation member 3 rotatably supported on the base 1 around a rotation shaft 2, a second rotation manipulation member 5 rotatably supported on the base 1 along a circular guide portion 4, a liftable member 6 supported to be liftable with respect to the second rotation manipulation member 5 on the base 1, three types of cam members 7 to 9 having different shapes from each other to be fixed to the first rotation manipulation member 3, and an elastic contact member 10 fixed to the liftable member 6 to be selectively engaged with the cam members 7 to 9, wherein a rotation detection element such as a rotary encoder or a rotary volume not shown is connected to the first rotation manipulation member 3. When the first rotation manipulation member 3 is manipulated to rotate, an amount or a direction of rotation is detected by the rotation detection element.

The three types of cam members 7 to 9 are fixed to an inner shaft 3a of the first rotation manipulation member 3 at equal intervals in an axial direction. Specifically, the cam members 7, 8, and 9 are disposed at upper, intermediate, and lower positions, respectively, and rotate along with the first rotation manipulation member 3 in one body. An outer peripheral portion of each of the cam members 7 to 9 is provided with click grooves 11 (see Fig. 6) at a predetermined pitch. When the first rotation manipulation member 3 rotates, a hemispherical protrusion 10a of the elastic contact member 10 is elastically disengaged from one of the click grooves 11 to generate a "click feel". Here, pitches and depths of the click grooves 11 of the three types of the cam member 7 to 9 are different from each other.

The second rotation manipulation member 5 is concentrically aligned with the first rotation manipulation member 3 at a lower position. The second rotation manipulation member 5 is formed in a circular shape with a larger diameter than the first rotation manipulation member 3, and the liftable member 6 is disposed inside the second rotation manipulation member 5 in a radial direction. The second rotation manipulation member 5 is provided with a pair of guide grooves 5a extended in an oblique direction with respect to the axial direction, and a pair of drive pins 12 that are slidably inserted into the respective guide grooves 5a is fixed to the liftable member 6. When the second rotation manipulation member 5 rotates, the drive pins 12 drive and relatively move along the guide grooves 5a. Therefore, depending on the rotation direction of the second rotation manipulation member 5, the liftable member 6 is lifted or lowered in the axial direction. Specifically, the guide grooves 5a and the drive pins 12 constitute a movement translating unit for translating the rotating movement of the rotation manipulation member 5 to the lifting or lowering movement of the liftable member 6. In addition, the lifting or lowering movement of the liftable member 6 is accompanied by the lifting or lowering movement of the elastic contact member 10, so that one of the cam members 7 to 9 which is engaged with the elastic contact member 10 is switched. Since the shapes (the pitches or depths of the click grooves 11) of the three types of cammembers 7 to 9 are different from each other, depending on which one of the cam members 7 to 9 is engaged with the elastic contact member 10, a manipulation touch (click feel) applied to the first rotation manipulation member 3 during the rotation manipulation is different.

In addition, as illustrated in Fig. 5, a plurality of locking holes 6a are formed at an outer peripheral surface of the liftable member 6, and a pair of plungers 13 which face each other and are assembled with the second rotation manipulation member 5 inside are intruded into the corresponding locking holes 6a by biasing force of a spring not shown, so that the second rotation manipulation member 5 can maintain the predetermined lift or lower position of the liftable member 6. For example, when the plunger 13 is intruded into the locking hole 6a distant from the driving pin 12 at an angle of about 90° (see Fig. 5), the height of the liftable member 6 illustrated in Fig. 3 or 4 is maintained. However, when the second rotation manipulation member 5 rotates clockwise from the position illustrated in Fig. 5 and the plunger 13 is intruded into another locking hole 6a (see Fig. 10), the height of the liftable member 6 illustrated in Fig. 8 or 9 is maintained. On the contrary, when the second rotation manipulation member 5 rotates counterclockwise from the position illustrated in Fig. 5 and the plunger 13 is intruded into another locking hole 6a (see Fig. 14), the height of the liftable member 6 illustrated in Fig. 12 or 13 is maintained.

In addition, inside the base 1, units for slidably moving the rotation shaft 2 and the circular guide portion 4 in a direction perpendicular to the axial direction are disposed. However, since the units are not directly related to the invention, a detailed description thereof is omitted.

Next, operations for switching a manipulation touch of the manual input apparatus having the aforementioned construction are described.

When the second rotation manipulation member 5 is disposed at a rotation position with respect to the base 1 as illustrate in Fig. 1, the second rotation manipulation member 5 is disposed at a rotation position with respect to the liftable member 6 as illustrated in Fig. 5. Therefore, the plunger 13 is intruded into the locking hole 6a far from the drive pin 12. In this state, since the liftable member 6 is maintained at the lift or lower position illustrated in Fig. 3 or 4, the hemispheric protrusion 10a of the elastic contact member 10 is engaged with the intermediate cam member 8, and the drive pin 12 is engaged with a longitudinal center portion of guide groove 5a as illustrated in Fig. 2. Therefore, when the first rotation manipulation member 3 is manipulated to rotate in this state, the hemispheric protrusion 10a of the elastic contact member 10 is disengaged from the click groove 11 of the intermediate cam member 8 to generate a click feel, and the click feel corresponding to the shape of the cam member 8 is fed back to a finger of a manipulator through the first rotation manipulation member 3.

On the other hand, when the manipulator rotates the second rotation manipulation member 5 clockwise from the position illustrated in Fig. 5 at about 45°, the rotation position of the second rotation manipulation member 5 with respect to the liftable member 6 is shifted to the position illustrated in Fig. 10. Therefore, as the drive pin 12 slides (see Fig. 7) to an upper end portion of the guide groove 5a, the liftable member 6 is lifted with respect to the second rotation manipulation member 5 to the lift or lower position illustrated in Fig. 8 or 9. In this state, the plunger 13 is intruded into one of the locking holes 6a that is close to the drive pin 12 to maintain the liftable member 6, and the hemispheric protrusion 10a of the elastic contact member 10 is engaged with the upper cam member 7. Therefore, when the first rotation manipulation member 3 is manipulated to rotate in this state, the hemispherical protrusion 10a of the elastic contact member 10 is disengaged from the click groove 11 of the upper cam portion 7 to generate a click feel, and the click feel corresponding to the shape of the cam member 7 is fed back to the finger of the manipulator through the first rotation manipulation member 3.

Additionally, when the manipulator rotates the second rotation manipulation member 5 counterclockwise from the position illustrated in Fig. 5 at about 45°, the rotation position of the second rotation manipulation member 5 with respect to the liftable member 6 is shifted to the position illustrated in Fig. 14. Therefore, as the drive pin 12 slides (see Fig. 11) to a lower end portion of the guide groove 5a, the liftable member 6 is pressed with respect to the second rotation manipulation member 5 to be lowered to the lift or lower position illustrated in Fig. 12 or 13. In this state, the plunger 13 is intruded into the other of the locking holes 6a that is close to the drive pin 12 to maintain the liftable member 6, and the hemispheric protrusion 10a of the elastic contact member 10 is engaged with the lower cam member 9. Therefore, when the first rotation manipulation member 3 is manipulated to rotate in this state, the hemispherical protrusion 10a of the elastic contact member 10 is disengaged from the click groove 11 of the lower cam member 9 to generate a click feel, and the click feel corresponding to the shape of the cam member 9 is fed back to the finger of the manipulator through the first rotation manipulation member 3.

As described above, in the manual input apparatus according to the embodiment of the invention, when the manipulator rotates the second rotation manipulation member 5, the lift or lower position of the liftable member 6 is shifted, and the elastic contact member 10 is disengaged from the cam member that is previously engaged and then engaged with the different cam member. Accordingly, due to the drive units that mechanically operate, the manipulation touch (click feel) applied to the first rotation manipulation member 3 during the rotation manipulation can be set to be different from the previous manipulation touch. In addition, in this manual input apparatus, the second rotation manipulation member 5 is concentrically aligned with the first rotation manipulation member 3, the entire apparatus can be downsized, and the manipulator can continuously manipulate the first and second rotation manipulation members 3 and 5 with a short movement of the finger. Therefore, excellent manipulability can be achieved.

In addition, according to the embodiment, in order to smoothly translate the rotating movement of the second rotation manipulation member 5 to the lifting or lowering movement of the liftable member 6, the drive pin 12 fixed to the liftable member 6 is slidably inserted into the guide groove 5a provided to the second rotation manipulation member 5. However, a configuration in which a drive pin provided to the second rotation manipulation member 5 is slidably inserted into a guide groove provided to the liftable member 6 is possible.

In addition, according to the embodiment, the three types of the cam members 7 to 9 are mounted to the first rotation manipulation member 3. However, two, or four or more types of cam members may be used. Additionally, a configuration in which a plurality of types of cam members are provided to the liftable member 6 and an elastic contact member that is selectively engaged with the cam members is provided to the first rotation manipulation member 3 is possible.

It should be understood by those skilled in the art that various modifications, combinations, sub-combinations and alterations may occur depending on design requirements and other factors insofar as they are within the scope of the appended claims of the equivalents thereof.

## Claims

1. A manual input apparatus having a first rotation manipulation member (3) which rotates at the time of inputting, **characterized by** comprising:
a liftable member (6) liftably supported in an axial direction of the first rotation manipulation member (3);
a plurality of cam members (7, 8, and 9) which have different shapes from each other and provided to one of the first rotation manipulation member (3) and the liftable member (6);
an elastic contact member (10) which is provided to the other of the first rotation manipulation member (3) and the liftable member (6) and selectively engaged with the cam members;
a second rotation manipulation member (5) concentrically aligned with the first rotation manipulation member (3) to be rotatably supported; and
a movement translating unit which translates a rotating movement of the second rotation manipulation member (5) to a lifting or lowering movement of the liftable member (6),
wherein the second rotation manipulation member (5) is manipulated to rotate to allow a lifting or lowering position of the liftable member (6) to be shifted, thereby enabling the elastic contact member (10) to be engaged with another of the cam members (7, 8, and 9), and
wherein a manipulation touch applied to the first rotation manipulation member (3) during the rotation manipulation is different depending on which one of the cam members (7, 8, and 9) is engaged with the elastic contact member (10).

2. The manual input apparatus according to claim 1, **characterized in that** the movement translating unit is constituted by a guide groove (5a) provided to one of the second rotation manipulation member (5) and the liftable member (6), and a drive pin (12) which is provided to the other thereof to be slidably inserted into the guide groove (5a), and the guide groove (5a) extends in an oblique direction with respect to the axial direction.
